# EUROPÄISCHE PATENTSCHRIFT

(11) **EP 0 264 633 B1**
(45) Veröffentlichungstag und Bekanntmachung des Hinweises auf die Patenterteilung: **01.12.1993**
(21) Anmeldenummer: 87113662.8
(22) Anmeldetag: 18.09.1987
(51) Int. Cl.: H01B 13/14, H01B 7/36

(54) **Verfahren zur gleichzeitigen Herstellung von mindestens zwei elektrischen Leitern**
Method for the simultaneous production of at least two electric conductors
Procédé de fabrication simultanée d'au moins deux conducteurs électriques

(30) Priorität: 15.10.1986 DE 3635102
(43) Veröffentlichungstag der Anmeldung: 27.04.1988
(73) Patentinhaber: kabelmetal electro GmbH, 30002 Hannover (DE)
(72) Erfinder: Obermeier, Manfred, D-8501 Eckental (DE); Reinhoffer, Stefan, D-8510 Fürth (DE)

(56) Entgegenhaltungen:
- CH-A- 462 910
- DE-A- 3 046 124
- GB-A- 950 741

## Beschreibung

Die Erfindung bezieht sich auf ein Verfahren zur gleichzeitigen Herstellung von mindestens zwei farblich unterschiedlich gekennzeichneten, isolierten elektrischen Leitern, bei welchem auf die beiden unabhängig voneinander geführten Leiter mittels eines Hauptextruders eine Grundisolierung aufgebracht wird und mit welchem für jeden Leiter zusätzliches, farbiges Material so zugeführt wird, daß zumindest die äußere Schicht der Isolierung der beiden Leiter unterschiedlich gefärbt ist (DE-Z "Drahtwelt", 1/2, 1986, Seiten 14 bis 16).

Derartige Leiter mit unterschiedlicher farblicher Kennzeichnung - im folgenden kurz als "Adern" bezeichnet - werden beispielsweise für Installations- und Schlauchleitungen benötigt. In solchen Leitungen sind beispielsweise drei unterschiedlich gefärbte Adern miteinander verseilt von einem Mantel aus Isoliermaterial umgeben. In herkömmlicher Technik werden die Adern in getrennten Arbeitsgängen hergestellt. Das läßt zwar eine hohe Fertigungsgeschwindigkeit zu, es werden jedoch drei voneinander unabhängige Maschinen mit zugehörigen Spulen zum Ab- und Aufwickeln benötigt.

Mit dem bekannten Verfahren nach der GB-A-950 741 können gleichzeitig zwei Adern hergestellt werden. Dazu wird auf zwei Drähte mittels eines Extruders eine Isolierung aufgebracht. Über der Isolierung der einen so erzeugten Ader wird mit einem zweiten Extruder zusätzlich eine farbige Schicht erzeugt. Damit beide Adern den gleichen Außendurchmesser haben, wird das als Isolierung aufzubringende Material der Ader mit der zusätzlichen Schicht im Extruder gestaut.

Aus der CH-A-462 910 ist außerdem ein Verfahren bekannt, mit dem die Abmessungen einzelner Schichten genau eingehalten werden sollen. Es werden dazu für die unterschiedlichen Schichten Materialien mit verschiedenen Dielektrizitätskonstanten eingesetzt. Außerdem werden der Durchmesser und die Kapazität der kombinierten Schichten gemessen. Bei Abweichungen von vorgegebenen Werten kann eine Regelung einsetzen.

In der eingangs erwähnten DE-Z "Drahtwelt" ist auf Seite 16 ein Verfahren beschrieben, mit dem gleichzeitig drei unterschiedlich gefärbte Adern hergestellt werden können. Es werden dazu drei metallische Leiter getrennt voneinander durch den Spritzkopf eines Extruders gezogen. Die vom Extruder geförderte Masse wird in drei Teilströme aufgeteilt, von denen je einer zu einem der Leiter geführt wird. Kurz vor dem Auftreffen der Teilströme auf die Leiter wird der Masse flüssige Farbe mittels einer Pumpe zugeführt. Die Farbe wird vom Massestrom mitgenommen. Sie soll denselben zumindest an der Oberfläche färben. Dieses bekannte Verfahren ist nur mit erheblichem Aufwand kontrollierbar. Es kann trotzdem nicht sichergestellt werden, daß die dem Massestrom beigefügte Farbe die Oberfläche der auf diese Weise erzeugten Isolierung vollständig bedeckt. Es kann vielmehr leicht geschehen, daß Stellen ohne Farbe vorhanden sind, an denen die Grundisolierung zu sehen ist. Eine solche Ader wäre Ausschuß. Weitere Schwierigkeiten ergeben sich bezüglich der Durchmesser der drei Adern, da das Fließverhalten der Masse im Spritzkopf eines Extruders mit drei Austrittsöffnungen nur schwierig zu steuern ist. Die mit diesem Verfahren hergestellten Adern werden also relativ großen Durchmesserschwankungen unterworfen sein, was nicht zulässig ist.

Der Erfindung liegt die Aufgabe zugrunde, ein Verfahren zum gleichzeitigen Herstellen von mindestens zwei unterschiedlich gefärbten Adern anzugeben, mit dem sichergestellt ist, daß die gesamte Oberfläche der Adern kontinuierlich eingefärbt ist und daß dieselben keine Durchmesserschwankungen aufweisen.

Diese Aufgabe wird mit dem Verfahren der eingangs geschilderten Art gemäß der Erfindung dadurch gelöst,
- daß die mit der Grundisolierung versehenen Leiter getrennt voneinander durch je einen Zusatzextruder geführt werden, in welchem auf die Grundisolierung rundum eine im Verhältnis zu deren Wandstärke dünne, farbige Schicht aufgebracht wird,
- daß der Durchmesser jedes so isolierten Leiters hinter dem Zusatzextruder gemessen wird und
- daß eine Abweichung des Durchmessers von einem vorgegebenen Sollwert zur Regelung der Dicke der auf die Grundisolierung aufzubringenden Schicht verwendet wird.

Vorteilhafte Ausgestaltungen der Erfindung gehen aus den Unteransprüchen 2 - 5 hervor.

Eine Vorrichtung zur Durchführung des Verfahrens ist im Anspruch 6 beansprucht.

Mit diesem Verfahren wird die Farbe mittels der Zusatzextruder auf die Grundisolierung der Adern aufgespritzt. Es wird also eine Schicht aufgebracht, die jede Ader als Hülle rundum umgibt. Die kontinuierliche Einfärbung ist damit sichergestellt. Die Einhaltung des vorgegebenen Durchmessers ist mit diesem Verfahren außerdem besonders einfach, da hierfür nicht in den Hauptextruder eingegriffen werden muß. Abweichungen vom vorgegebenen Durc hmesser werden vielmehr den Zusatzextrudern aufgegeben, die dementsprechend eine mehr oder weniger dicke Schicht auf die Grundisolierung aufspritzen. Schwankungen im Durchmesser der Grundisolierung, die auf sich verändernde Verhältnisse im Hauptextruder zurückzuführen sind, können auf diese Weise sehr einfach ausgeglichen werden.

Das Verfahren nach der Erfindung wird anhand der Zeichnungen als Ausführungsbeispiel erläutert.

Es zeigen:

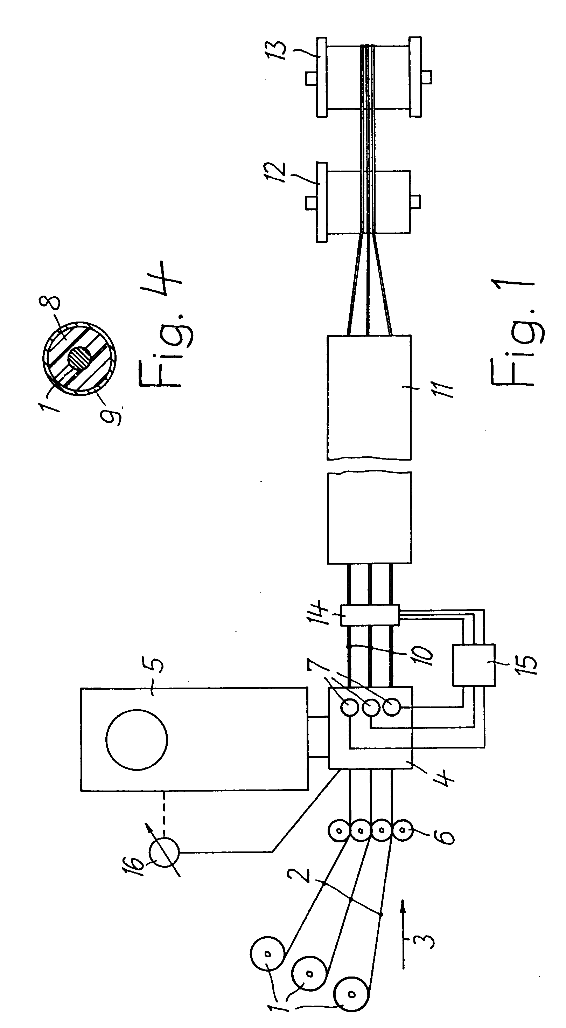

Fig. 1 in schematischer Darstellung eine Vorrichtung zur Durchführung des Verfahrens nach der Erfindung.

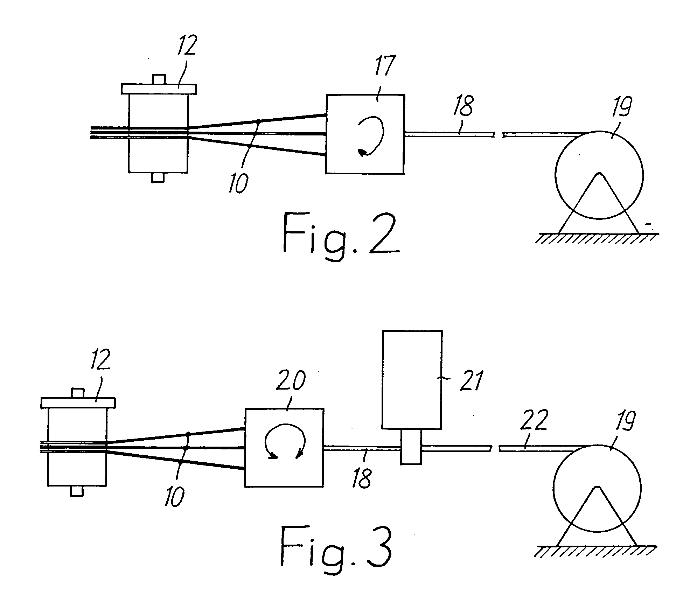

Fig. 2 und 3 Zusatzeinrichtungen für eine Vorrichtung nach Fig. 1.
Fig. 4 einen Querschnitt durch eine mit dem Verfahren hergestellte Ader in vergrößerter Darstellung.

Das Verfahren nach der Erfindung wird im folgenden für die gleichzeitige Herstellung von drei unterschiedlich gefärbten Adern erläutert. Es müssen mindestens zwei Adern sein. Es können aber auch mehr Adern sein.

Von drei Spulen 1 werden blanke elektrische Leiter 2 in Richtung des Pfeiles 3 abgezogen, die vorzugsweise aus Kupfer bestehen. Die Leiter 2 können als massive Drähte oder als Litzen ausgeführt sein. Sie werden durch den Spritzkopf 4 eines Hauptextruders 5 geführt, in welchem auf jeden Leiter 2 eine Grundisolierung 8 aufgespritzt wird, deren Material für alle drei Leiter 2 gleich ist. Zwischen den Spulen 1 und dem Spritzkopf 4 können die Leiter 2 über Umlenkrollen 6 geführt werden.

Auf den Spritzkopf 4 des Hauptextruders 5 sind drei Zusatzextruder 7 aufgesetzt, deren Abmessungen und Leistungen klein sind im Verhältnis zum Hauptextruder 5. Die Spritzköpfe der Zusatzextruder 7 sind im Spritzkopf 4 integriert. Sie sind voneinander getrennt, so daß die mit der Grundisolierung 8 versehenen Leiter 2 getrennt voneinander in die Zusatzextruder 7 geführt werden. In den Zusatzextrudern 7 wird für jeden Leiter 2 auf die Grundisolierung 8 eine im Verhältnis zu deren Dicke dünne Schicht 9 als Hülle aufgespritzt, die damit jeweils die Grundisolierung 8 vollständig umgibt. Aus dem Spritzkopf 4 treten dann die fertig isolierten Adern 10 aus, die alle unterschiedliche Farbe aufweisen, da mit den Zusatzextrudern 7 unterschiedlich gefärbte Schichten 9 auf die Grundisolierung 8 aufgespritzt werden.

Die drei Zusatzextruder 7 könnten grundsätzlich auch unabhängig vom Spritzkopf 4 hinter demselben angeordnet werden. Zweckmäßig werden sie jedoch - wie beschrieben - auf den Spritzkopf 4 aufgesetzt. Sie bilden dann eine Einheit mit demselben.

Die Adern 10 durchlaufen hinter den Extrudern 5 und 7 eine Kühlstrecke 11. Zum Abzug der Adern 10 ist eine gemeinsame Abzugsscheibe 12 vorhanden. Die Adern 10 können gemeinsam auf eine Spule 13 aufgewickelt werden.

Direkt hinter dem Spritzkopf 4 ist eine Meßeinrichtung 14 angeordnet, mit der die Durchmesser der Adern 10 gemessen werden. Die Meßergebnisse werden als Istwert zu einem Rechner 15 geführt, in welchem sie mit einem Sollwert verglichen werden. Bei einer Abweichung zwischen Istwert und Sollwert bei einer der Adern 10 wird der entsprechende Zusatzextruder 7 im Ausgleichssinne verstellt. Das bedeutet, daß die Dicke der extrudierten Schicht 9 vergrößert oder verkleinert wird. Schwankungen im Durchmesser der Grundisolierung 8 können dadurch auf einfache Weise schnell ausgeglichen werden.

Um solche Durchmesserschwankungen der Grundisolierung 8 weitgehendst auszuschließen, kann am Hauptextruder 5 ein Druckmeßgerät 16 angebracht sein, mittels dessen durch Beeinflussung der Drehzahl der Schnecke des Extruders 5 der Druck im Spritzkopf 4 auf einen konstanten Wert geregelt wird. Das Fließverhalten des Materials im Spritzkopf 4 kann dadurch so vergleichmäßigt werden, daß die Grundisolierung 8 völlig gleichmäßig auf die drei Leiter 2 aufgebracht wird.

Die Adern 10 können von der Abzugsscheibe 12 aus auch direkt zu einer Verseilvorrichtung 17 geführt werden, in welcher sie miteinander verseilt werden. Anschließend kann das verseilte Gebilde 18 auf eine Spule 19 aufgewickelt werden.

Wenn zum Verseilen eine Einrichtung 20 verwendet wird, in der die Adern 10 mit wechselnder Schlagrichtung verseilt werden, dann kann das verseilte Gebilde 18 einem Extruder 21 zugeführt werden, in welchem auf die drei verseilten Adern ein Mantel aus Isoliermaterial aufgebracht wird. Die fertige Leitung 22 kann dann auf die Spule 19 aufgewickelt werden.

Mit den Zusatzextrudern 7 wird auf die Grundisolierung 8 eines jeden Leiters 2 eine farbige Schicht 9 aufgespritzt. Falls eine Ader 10 zweifarbig ausgeführt werden soll, dann kann das grundsätzlich ebenfalls mit einem Zusatzextruder 7 durchgeführt werden. Eine solche Ader wird beispielsweise für den grün/gelb gekennzeichneten Schutzleiter benötigt. Bei entsprechender Ausführung des Spritzkopfes eines solchen Extruders kann eine Schicht 9 aufgetragen werden, die zwei in Umfangsrichtung klar getrennte unterschiedliche Farben aufweist. Es wäre aber auch möglich, die eine Farbe mit einem Zusatzextruder 7 aufzubringen und die andere Farbe hinter der Meßeinrichtung 14 mit feuchter Farbe aufzutragen.

## Patentansprüche

1. Verfahren zur gleichzeitigen Herstellung von mindestens zwei farblich unterschiedlich gekennzeichneten, isolierten elektrischen Leitern, bei welchem auf die beiden unabhängig voneinander geführten Leiter mittels eines Hauptextruders eine Grundisolierung aufgebracht wird und mit welchem für jeden Leiter zusätzliches, farbiges Material so zugeführt wird, daß zumindest die äußere Schicht der Isolierung der beiden Leiter unterschiedlich gefärbt ist, dadurch gekennzeichnet,
- daß die mit der Grundisolierung (8) versehenen Leiter (2) getrennt voneinander durch je einen Zusatzextruder (7) geführt werden, in welchem auf die Grundisolierung (8) rundum eine im Verhältnis zu deren Wandstärke dünne, farbige Schicht (9) aufgebracht wird,
- daß der Durchmesser jedes so isolierten Leiters (2) hinter dem Zusatzextruder (7) gemessen wird und
- daß eine Abweichung des Durchmessers von einem vorgegebenen Sollwert zur Regelung der Dicke der auf die Grundisolierung (8) aufzubringenden Schicht (9) verwendet wird.

2. Verfahren nach Anspruch 1, dadurch gekennzeichnet, daß der Druck im Spritzkopf (4) des Hauptextruders (5) geregelt wird.

3. Verfahren nach Anspruch 1 oder 2, dadurch gekennzeichnet, daß die isolierten Leiter (2) gemeinsam auf eine Spule (13) aufgewickelt werden.

4. Verfahren nach Anspruch 1 oder 2, dadurch gekennzeichnet, daß die isolierten Leiter (2) im gleichen Arbeitsgang miteinander verseilt und danach auf eine Spule (19) aufgewickelt werden.

5. Verfahren nach Anspruch 1, 2 oder 4, dadurch gekennzeichnet, daß die isolierten Leiter (2) mit wechselnder Schlagrichtung miteinander verseilt werden, daß im gleichen Arbeitsgang ein Mantel aus Isoliermaterial auf die verseilten Leiter gespritzt wird und daß die so hergestellte Leitung (22) auf die Spule (19) aufgewickelt wird.

6. Vorrichtung zur Durchführung des Verfahrens nach einem der Ansprüche 1 bis 5, dadurch gekennzeichnet,
- daß für jeden Leiter (2) ein Zusatzextruder (7) vorhanden ist,
- daß die Zusatzextruder (7) auf den Spritzkopf (4) des Hauptextruders (5) aufgesetzt sind und
- daß eine mit einem Rechner (15) verbundene Meßeinrichtung (14), mit der der Durchmesser jedes isolierten Leiters (2) gemessen wird, direkt hinter den Zusatzextrudern (7) angeordnet ist, wobei bei einer Abweichung zwischen Ist- und Sollwert eines Durchmessers der entsprechende Zusatzextruder (7) im Ausgleichssinne verstellt wird.

## Claims

1. Process for the simultaneous production of at least two insulated electric conductors, marked by different colours, in which a basic insulation is applied by means of a main extruder to the two conductors, transported independently of each other, and by which additional, coloured material is fed for each conductor in such a way that at least the outer layer of the insulation of the two conductors is differently coloured, characterised
- in that the conductors (2) provided with the basic insulation (8) are transported separately from each other through an additional extruder (7) for each, in which a coloured layer (9), thin in relation to the wall thickness of the basic insulation (8), is applied to the latter on all sides,
- in that the diameter of each conductor (2) thus insulated is measured downstream of the additional extruder (7) and
- in that a deviation of the diameter from a predetermined set value is used for controlling the thickness of the layer (9) to be applied to the basic insulation (8).

2. Process according to Claim 1, characterised in that the pressure in the extrusion head (4) of the main extruder (5) is controlled.

3. Process according to Claim 1 or 2, characterised in that the insulated conductors (2) are wound up together onto a reel (13).

4. Process according to Claim 1 or 2, characterised in that the insulated conductors (2) are twisted with each other in the same operation and are then wound up onto a reel (19).

5. Process according to Claim 1, 2 or 4, characterised in that the insulated conductors (2) are twisted with each other with alternating direction of lay, in that in the same operation a sheath of insulating material is extruded onto the twisted conductors and in that the line (22) thus produced is wound up onto the reel (19).

6. Apparatus for carrying out the process according to one of Claims 1 to 5, characterised
- in that there is an additional extruder (7) for each conductor (2),
- in that the additional extruders (7) are fitted onto the extrusion head (4) of the main extruder (5), and
- in that a measuring device (14), which is connected to a computer (15) and by which the diameter of each insulated conductor (2) is measured, is arranged directly downstream of the additional extruders (7), in which arrangement, if there is a deviation between actual value and set value of a diameter, the corresponding additional extruder (7) is adjusted appropriately to compensate.

## Revendications

1. Procédé pour fabriquer en même temps au moins deux conducteurs électriques caractérisés de façon distinguable par des couleurs, dans lequel on dépose à l'aide d'une extrudeuse principale une isolation de base sur les deux conducteurs guidés indépendamment l'un de l'autre et dans lequel on ajoute sur chaque conducteur un matériau coloré additionnel, de façon qu'au moins la couche extérieure de l'isolation des deux conducteurs soit colorée différemment,
caractérisé en ce que,
- les deux conducteurs (2) pourvus de l'isolation de base (8) sont entraînés séparés l'un de l'autre à travers une extrudeuse auxiliaire (7), dans laquelle on dépose tout autour de l'isolation de base (8) une couche colorée (9) dont l'épaisseur est faible vis-à-vis de celle de l'isolation de base (8),
- en ce que le diamètre de chacun des conducteurs (2) ainsi isolé est mesuré derrière l'extrudeuse auxiliaire (7) et,
- en ce qu'une diminution du diamètre par rapport à une valeur de consigne donnée est utilisée pour le réglage de l'épaisseur de la couche (9) déposée sur l'isolation de base (8).

2. Procédé selon la revendication 1, caractérisé en ce que la pression est réglée dans la tête d'injection (4) de l'extrudeuse principale (5).

3. Procédé selon l'une des revendications 1 ou 2, caractérisé en ce que, les conducteurs isolés (2) sont déroulés ensemble d'une bobine (13).

4. Procédé selon l'une des revendications 1 ou 2, caractérisé en ce que, les conducteurs isolés (2) sont torsadés ensemble lors de la même opération et ensuite enroulés sur une bobine (19).

5. Procédé selon l'une des revendications 1, 2 ou 4, caractérisé en ce que, les conducteurs isolés (2) sont torsadés ensemble dans des sens alternés, en ce que lors de la même opération on injecte une gaine de matériau isolant sur les conducteurs torsadés et en ce que l'on enroule le conducteur ainsi formé sur une bobine (19).

6. Dispositif pour la mise en oeuvre du procédé selon l'une des revendications 1 à 5, caractérisé
- en ce que l'on prévoit une extrudeuse auxiliaire (7) pour chaque conducteur (2),
- en ce que les extrudeuses auxiliaires (7) sont mises sur la tête d'injection de l'extrudeuse principale (5) et
- en ce que l'on dispose un circuit de mesure (14) relié à un compteur (15) directement derrière les extrudeuses auxiliaires (7), ledit circuit (14) servant à mesurer le diamètre de chacun des conducteurs isolés (2) si bien que, lors d'un écart entre les grandeurs mesurées et de consigne d'un diamètre, l'extrudeuse auxiliaire (7) correspondante est réglée pour compenser.
